# NEUE EUROPÄISCHE PATENTSCHRIFT

(11) **EP 1 156 256 B2**
(45) Veröffentlichungstag und Bekanntmachung des Hinweises auf die Entscheidung über den Einspruch: **11.08.2010**
(45) Hinweis auf die Patenterteilung: 07.09.2005
(21) Anmeldenummer: 01104668.7
(22) Anmeldetag: 24.02.2001
(51) Int. Cl.: F16L 23/06, F16L 23/10

(54) **Spannring**
Clamping ring
Anneau de serrage

(30) Priorität: 19.05.2000 DE 10024834
(43) Veröffentlichungstag der Anmeldung: 21.11.2001
(73) Patentinhaber: Fr. Jacob Söhne GmbH & Co., 32457 Porta Westfalica (DE)
(72) Erfinder: Richter, Peter, 32675 Bückeburg (DE)
(74) Vertreter: Dantz, Jan Henning

(56) Entgegenhaltungen:
- EP-A2- 0 195 914
- AT-A- 327 632
- DE-A- 19 728 655
- DE-C- 47 720
- DE-C- 950 522
- DE-U- 8 522 994
- DE-U- 8 808 329
- FR-A- 1 334 953
- US-A- 2 479 580
- US-A- 2 689 141
- KAMMANN METALLBAU HARPSTEDT: 'Sonderanfertigungen- Verteilersysteme Rohre- Rohr Formteile' 01 Januar 1986 - 01 Januar 1991, HARPSTEDT,

## Beschreibung

Die vorliegende Erfindung betrifft einen Spannring, insbesondere zum Verbinden zweier Rohrenden, nach dem Oberbegriff des Anspruchs 1.

Es wurden bereits Spannringe vorgeschlagen, die aus zwei gelenkig miteinander verbundenen Segmenten gebildet sind und auf der dem Gelenk gegenüberliegenden Seite mittels einer Verschlusseinrichtung miteinander verspannt werden können. Die Verschlusseinrichtung ist nach Art eines Schnellverschlusses ausgebildet, bei der mittels eines Hebels die beiden Segmente miteinander verspannt werden können, so dass kein Montagewerkzeug erforderlich ist. Um die Spannkraft des Spannringes einstellen zu können, ist an der Verschlusseinrichtung ein Verstellelement, beispielsweise in Form einer Schraube, vorgesehen, die in einen Gelenkbolzen eindrehbar ist, so dass bei Öffnen der Verschlusseinrichtung die Verstelleinrichtung eine Justierung der Spannkraft durch Verstellung der Position der Segmente des Spannringes zueinander ermöglicht.

Ein solcher Spannring besitzt den Nachteil, dass die Montage des Spannringes relativ aufwendig ist, da zum Einstellen der Spannkraft jedesmal die Verschlusseinrichtung geöffnet und wieder verschlossen werden muss. Die Einstellung erfolgt also schrittweise, bis sich die gewünschte Spannkraft einstellt. Diese Feineinstellung ist dadurch relativ mühsam, gerade weil der einzustellende Verstellweg meist gering ist. Eine direkte Verstellung des Spannringes im geschlossenen Zustand ist meist nicht vorgesehen oder nur schlecht möglich, da dieser Bereich schwer zugänglich ist.

Aus der US-2 479 580 ist ein Spannring bekannt, der als Schnellverschluss auf einfache Weise zu montieren ist und bei dem die Nachstellung bzw. die Einstellung der Spannkraft bei Bedarf auch im geschlossenen Zustand nachträglich auf einfache Weise möglich ist.

Die DE 8808329 zeigt einen Spannring mit den Merkmalen des Oberbegriffes des Anspruches 1.

Aufgabe der Erfindung ist dieser bekannte Spannring zu verbessern.

Die Erfindung ist von den Merkmalen des Anspruchs 1 definiert.

Gemäß einer bevorzugten Ausführungsform der Erfindung ist eine Verstelleinrichtung zur stufenlosen Verstellung der zwei gelenkig miteinander verbundenen Segmente vorgesehen, so dass die Einstellung der Spannkraft besonders sensibel erfolgen kann. Dabei kann die Verstelleinrichtung durch eine in einen Gelenkbolzen eindrehbare Schraube oder andere geeignete Mittel gebildet sein.

Ein einfach aufgebauter Spannring mit wenigen Bauteilen weist zwei Segmente auf, die an einer Seite über das verstellbare Gelenkelement und an der gegenüberliegenden Seite über die Verschlusseinrichtung miteinander verbunden sind.

Die Verschlusseinrichtung weist einen Bügel auf, der einen an einem ersten Segment vorgesehenen Vorsprung umgreift. Diese Art der Verschlusseinrichtung lässt sich leicht montieren, da der Bügel lediglich über den Vorsprung geklappt werden muss, um eine Verbindung der beiden Segmente miteinander herzustellen. Zum Vorspannen ist der Bügel gelenkig mit einem an einem zweiten Segment angelenkten Hebel verbunden, so dass durch die Hebelbewegung die beiden Segmente zusammengezogen werden.

Um den Spannring möglichst flexibel einsetzen zu können, ist der Bügel vorzugsweise austauschbar an dem Hebel gehalten. Dadurch kann bei zu verbindenden Rohrenden mit abweichendem Durchmesser bzw. unterschiedlichen Dichtungsmitteln ein geeigneter Bügel an dem Spannring montiert werden, ohne dass die restlichen Elemente des Spannringes ausgetauscht werden müssten. Zusätzlich oder statt des Austausches des Bügels kann auch der Hebel ausgetauscht werden oder mehrere Löcher aufweisen, so dass der Gelenkbolzen des Bügels in unterschiedliche Löcher montiert werden kann.

Gemäß der Erfindung ist der Bügel in Schwenkrichtung an einer Seitenfläche des Hebels geführt. Der Bügel ist durch einen Bolzen mit dem Hebel verbunden. Die Führung des Bügels an den Seitenflächen des Hebels und ergänzend an den Seitenflächen des Vorsprunges gewährleistet eine gerade Schwenkbewegung, selbst wenn der Gelenkbolzen mit Spiel im Bügel aufgenommen ist. Wenn der Bügel zusätzlich formschlüssig an dem Vorsprung anliegt, die Bereitstellung der notwendigen Spannkraft erreicht.

Gemäß einer weiteren Ausführungsform der Erfindung ist die Verschlusseinrichtung mit einer zweiten Verstelleinrichtung zur nachträglichen Einstellung der Position zweier Segmente relativ zueinander versehen. Dadurch kann der Bereich zwischen dem maximalen und minimalen Aufnahmedurchmesser des Spannringes vergrößert werden, da beide Verstelleinrichtungen sich ergänzen. Um die zweite Verstelleinrichtung kostengünstig herstellen zu können, ist diese vorzugsweise durch eine in den Bügel eindrehbare Schraube gebildet. Der Bügel oder Bügel und Hebel sind nachträglich mit dem Bügel ohne Nachstellmöglichkeit bei Erfordernis austauschbar.

Die Erfindung wird nachfolgend anhand von zwei Ausführungsbeispielen mit Bezug auf die beigefügten Zeichnungen näher erläutert. Es zeigen:
- Fig. 1: eine Seitenansicht eines erfindungsgemäßen Spannringes gemäß einem ersten Ausführungsbeispiel;
- Fig. 2: eine Unteransicht des Spannringes der Fig. 1;
- Fig. 3: eine Draufsicht auf den Spannring der Fig. 1;
- Fig. 4: eine Schnittansicht entlang der Linie x-x der Fig. 1;
- Fig. 5: eine Seitenansicht eines Spannringes gemäß einer zweiten Ausführungsform der Erfindung;
- Fig. 6: eine Unteransicht des Spannringes der Fig. 5, und
- Fig. 7: eine Draufsicht auf den Spannring der Fig. 5.

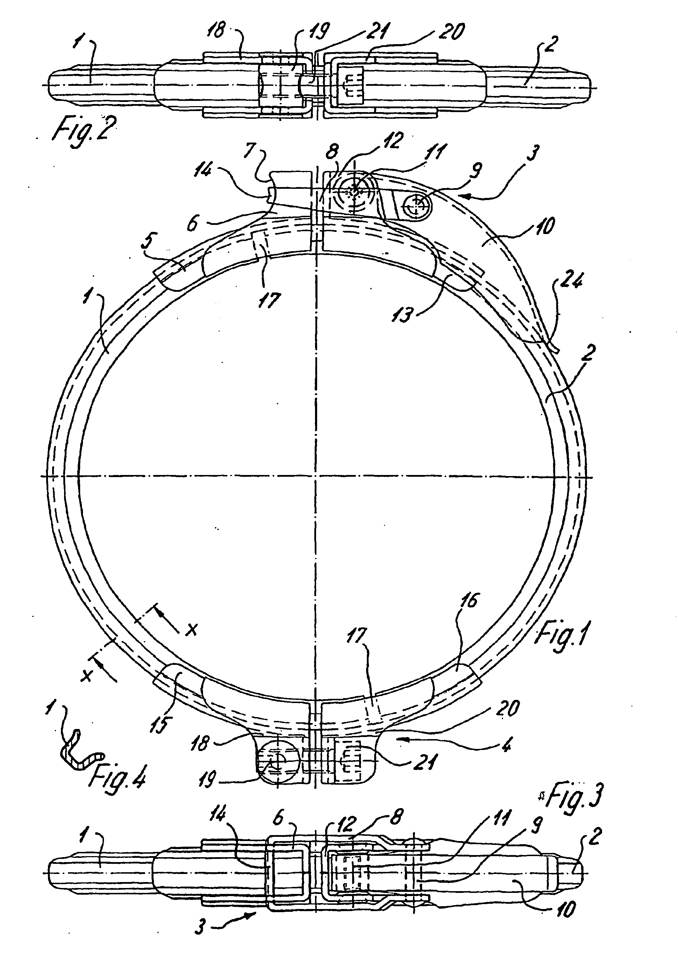

Der in den Fig. 1 bis 4 gezeigte Spannring weist ein erstes Segment 1 und ein zweites Segment 2 auf. Die beiden Segmente 1 und 2 sind auf einer Seite mit einer Verschlusseinrichtung 3 und auf der anderen Seite über ein Gelenkelement 4 miteinander verbunden. Die Segmente 1 und 2 besitzen im wesentlichen einen U-förmigen Querschnitt (Fig. 4) mit schräg nach außen verlaufenden Schenkeln, so dass zwei Rohrflansche mit Dichtmitteln in den Segmenten 1 und 2 aufnehmbar sind und durch ein Zusammenbewegen der Segmente 1 und 2 die Rohrenden dicht aneinander gedrückt werden.

Das Segment 1 ist im Bereich der Verschlusseinrichtung von einem Profil 5 umgeben, dass an dem Segment angeschweißt ist. Das Profil 5 weist zwei hervorstehende Seitenwände 6 auf, die eine Anlagefläche 7 für den Eingriff mit einem Bügel 8 besitzen. Der Bügel 8 ist an einer Achse 9 gelenkig mit einem Hebel 10 verbunden, der wiederum an einer Achse 11 an einem Vorsprung 12 angelenkt ist. Das Segment 2 ist im Bereich der Verschlusseinrichtung mit einem Profil 13 umgeben, an dem der Vorsprung 12 ausgebildet ist. Der Bügel 8 weist in seinem vorderen Bereich einen Steg 14 auf, der an der Anlagefläche 7 anliegt. Der Anlagepunkt des Bügels 8, die Achse 9 und die Achse 11 bilden ein Dreieck aus, so dass beim Schließen des Hebels 10 der Totpunkt der Verschlusseinrichtung leicht überschritten wird und der Hebel 10 über die Spannkräfte in der geschlossenen Position sicher gehalten ist. Dabei liegt der Hebel 10 am Ende des Griffbereichs 24 an dem Segment 2 an.

Auf der gegenüberliegenden Seite ist ein Gelenkelement 4 vorgesehen, das die Segmente 1 und 2 gelenkig miteinander verbindet. Hierfür ist das Segment 1 dauerhaft mit einem Profil 15 verbunden, an dem ein Vorsprung 18 ausgebildet ist. Auf ähnliche Weise ist das Segment 2 von einem Profil 16 umgeben, an dem ein Vorsprung 20 ausgebildet ist. In dem Vorsprung 18 ist ein Gelenkbolzen 19 aufgenommen, der mit einer Gewindebohrung versehen ist. In dieser Gewindebohrung ist eine Schraube 21 eingedreht, die im Bereich des Kopfes an einer Wand des Vorsprunges 20 anliegt. Durch ein Eindrehen der Schraube 21 lässt sich somit ein Spalt 17 zwischen dem Segment 1 und dem Segment 2 verkleinern oder gegebenenfalls auch vergrößern.

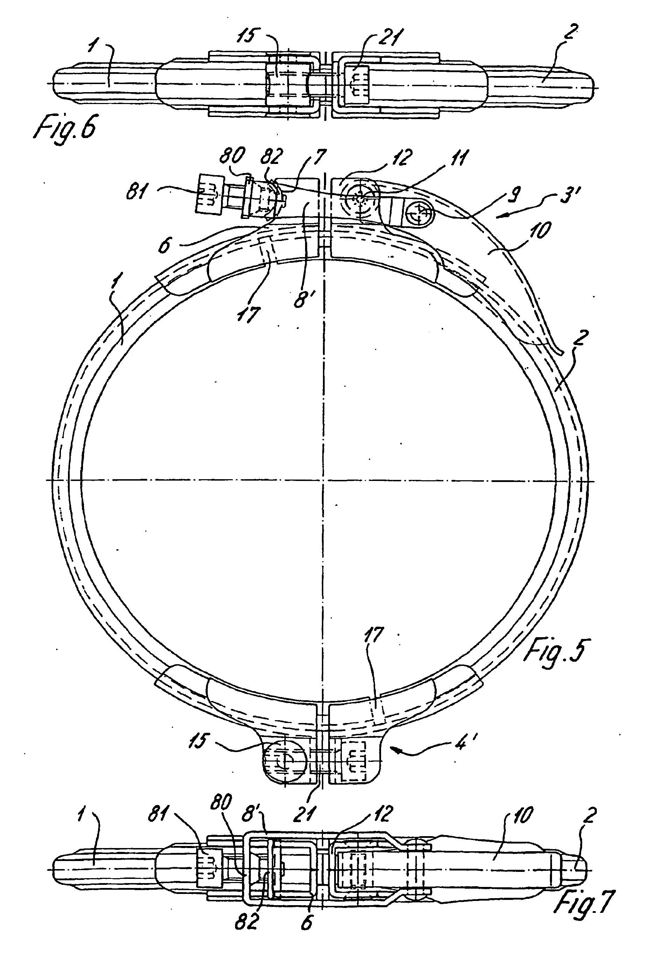

In den Fig. 5 bis 7 ist ein zweites Ausführungsbeispiel eines Spannringes dargestellt, wobei gleiche Bauteile wie beim ersten Ausführungsbeispiel mit den gleichen Bezugsziffern gekennzeichnet sind. Bei diesem Spannring ist zwischen den Segmenten 1 und 2 ein Gelenkelement 4' vorgesehen. In der Funktion ist das Gelenkelement 4' identisch mit dem Gelenkelement 4.

Auf der gegenüberliegenden Seite ist eine Verschlusseinrichtung 3' vorgesehen, bei der ein Bügel 8' gelenkig über eine Achse 9 mit einem Hebel 10 verbunden ist, der wiederum an einer Achse 11 gelenkig mit dem Segment 2 verbunden ist. Der Bügel 8' weist an seinem Ende einen Steg 80 auf, in dem eine Gewindebohrung ausgespart ist. In der Gewindebohrung ist eine Schraube 81 eingedreht, die an ihrer Vorderseite eine abgerundete Scheibe 82 trägt. Die Scheibe 82 liegt an der abgerundeten Anlagefläche 7 des Vorsprunges 6 an. Durch Drehen der Schraube 81 lässt sich der Abstand zwischen den Segmenten 1 und 2 bzw. die Spannkraft nach erfolgter Montage einstellen.

Die Form des Hebels 10 ist jeweils so gewählt, dass das Segment 2 zumindest teilweise umgriffen wird und insgesamt eine möglichst abgerundete, optisch formgerechte Bauteiloberfläche darstellt.

In den dargestellten Ausführungsbeispielen ist jeweils nur eine Öffnung in dem Hebel 10 für Aufnahme einer Achse 9 des Bügels 8 vorgesehen. Es ist auch möglich, in dem Hebel 10 mehrere Öffnungen auszusparen, so dass der Bügel 8 an unterschiedlichen Stellen in dem Hebel 10 montiert werden kann. Dies vergrößert den maximalen Verstellbereich.

Vorzugsweise ist der Bügel 8 und/oder der Hebel 10 austauschbar, so dass der Spannring für verschiedene Anwendungsfälle flexibel einsetzbar ist.

Der Spannring kann aus Stahl verzinkt oder Edelstahl hergestellt sein.

Der Spalt 17 zwischen dem Segment 1 und dem Segment 2 ist vorzugsweise in einem Bereich vorgesehen, in dem die Segmente von einem Profil 5, 13, 15 oder 16 umgeben sind, so dass ein seitliches Fixieren des Segmentes 1 oder 2 durch das jeweilige Profil erreicht und ein Entweichen des eingelegten Dichtungsmaterials verhindert wird.

In den dargestellten Ausführungsbeispielen erfolgt das Verstellen der Segmente 1 und 2 jeweils über Schrauben mit Innensechskant. Es ist jedoch auch möglich, andere Schrauben oder Verstellelemente, wie Drehknöpfe, Rast- oder Klemmverbindungen vorzusehen.

## Patentansprüche

1. Spannring, insbesondere zum Verbinden zweier Rohrenden, mit einer ringförmigen Aufnahme, die aus mehreren aneinander angelenkten Segmenten (1, 2) gebildet ist, und einer Verschlußeinrichtung (3') mittels der zwei Segmente (1, 2) lösbar miteinander verbindbar sind, wobei an einem ersten Gelenkelement (4, 4`) zwischen zwei Segmenten (1, 2) die Position der Segmente (1, 2) relativ zueinander verstellbar ist, wobei an jedem Segment (1, 2) ein umgebendes Profil (5, 16) vorgesehen ist, das an dem jeweiligen Segment (1, 2) angeschweißt ist und einen Spalt (17) zwischen zwei Segmenten (1, 2) überdeckt, **dadurch gekennzeichnet, dass** die Verschlusseinrichtung (3) einen Bügel (8) aufweist, der einen an einem ersten Segment (1) vorgesehenen Vorsprung (6) umgreift, wobei der Bügel (8) gelenkig mit einem an einem zweiten Segment (2) angelenkten Hebel (10) verbunden ist, wobei der Anlagepunkt des Bügels (8), eine Achse (9) des Bügels (8) zur gelenkigen Verbindung an dem Hebel (10), und eine Achse (11) zur Anlenkung des Hebels (10) an einem Vorsprung (12) am zweiten Segment (2) ein Dreieck ausbilden, so dass beim Schließen des Hebels (10) der Todpunkt der Verschlusseinrichtung überschritten wird und der Hebel (10) am Ende des Griffbereiches (24) an dem zweiten Segment (2) anliegt, und der Bügel (8) in Schwenkrichtung an einer Seitenfläche des Hebels (10) und des Vorsprungs (12) am zweiten Segment (2) geführt ist.

2. Spannring nach Anspruch 1, **dadurch gekennzeichnet, dass** der Spannring zwei Segmente (1, 2) aufweist, die an einer Seite über das verstellbare Gelenkelement (4, 4') und an einer gegenüberliegenden Seite die Segmente (1, 2) über die Verschlusseinrichtung (3') miteinander verbunden sind,

3. Spannring nach Anspruch 1 oder 2, **dadurch gekennzeichnet, dass** der Bügel (8') austauschbar an dem Hebel (10) oder mit dem Hebel (10) austauschbar am Element (13) des Segmentes (2) gehalten ist.

4. Spannring nach einem der Ansprüche 1 bis 3, **dadurch gekennzeichnet, dass** die zweite Verstelleinrichtung eine in den Bügel (8) eindrehbare Schraube (81) aufweist.

5. Spannring nach einem der Ansprüche 1 bis 4, **dadurch gekennzeichnet, dass** die Verschlusseinrichtung (3) mit einer zweiten Verstelleinrichtung (80, 81, 82) zur Einstellung der Position zweier Segmente (1, 2) relativ zueinander versehen ist.

6. Spannring nach einem der Ansprüche 1 bis 5, **dadurch gekennzeichnet, dass** das Profil (5, 13, 15, 16) zumindest bereichsweise beide Segmente (1, 2) umgreift.

## Claims

1. Clamping ring, in particular for connecting two pipe ends, having an annular receptacle, which is formed from a plurality of segments (1, 2) linked to one another, and having a closing device (3') by means of which two segments (1, 2) can be releaseably connected to one another, the position of the segments (1, 2) being adjustable relative to one another at a first articulation element (4, 4'), wherein a sourrounding profile (5, 16) is provided on each segment (1, 2), this profile (5, 16) being welded to the respective segment (1, 2) and covering a gap (17) between two segments (1, 2), **characterized in that** the closing device (3) has a stirrup (8) which encloses a projection (6) provided on a first segment (1), wherein the stirrup (8) is connected in an articulated manner to a lever (10) linked to a second segment (2); wherein the point of articulation of the stirrup (8), an axis (9) of the stirrup (8) for an articulated connection on the lever (10), and an axis (11) for an articulation of the lever (10) on a projection (12) provided on a second segment (2) are forming a triangle, so that the dead centre is passed over when closing the lever (10) and wherein the lever (10) abuts on the second segment (2) at the end of the handhold area and the stirrup (8) is guided in the pivoting direction on a side face of the lever (10) and on a side face of the projection (12).

2. Clamping ring according to Claims 1, **characterised in that** the clamping ring has two segments (1, 2), which are connected to one another on one side via the adjustable articulation element (4, 4 ') and on an opposite side via the closing device (3').

3. Clamping ring according to claim 1 or 2, **characterised in that** the stirrup (8) is interchangeably held on the lever (10) or is interchangeably held with the lever (10) on the element (13) of the segment (2).

4. Clamping ring according to one of the claims 1 to 3, **characterised in that** the second adjusting device has a screw (81) which can be screwed into the stirrup (8).

5. Clamping ring according to one of the claims 1 to 4, **characterised in that** the closing device (3) is provided with a second adjusting device (80, 81, 82) for setting the position of two segments (1, 2) relative to one another.

6. Clamping ring according to one of the claims 1 to 5, **characterised in that** the profile (5, 13, 15, 16) encloses at least a region of both segments (1, 2).

## Revendications

1. Bague de serrage, destinée en particulier à raccorder deux extrémités de tubes, comprenant un logement annulaire constitué de plusieurs segments (1, 2) articulés les uns aux autres, et un dispositive de fermeture (3') au moyen duquel il est possible de raccorder de façon détachable deux segments (1, 2), la position des segments (1, 2) l'un par rapport à l'autre pouvant être réglée, au niveau d'un premier élément d'articulation (4, 4') entre deux segments (1, 2), sur chaque segment (1, 2), un profilé enveloppant (5, 16) est prévu, qui est soudé sur le segment (1, 2) concerné et recouvre un interstice (17) existant entre deux segments (1, 2), **caracterisée en ce que** le dispositive de fermeture (3) présente un étrier (8) qui entoure une saillie (6) prevue sur un premier segment (1), l'étrier (8) est relié de façon articulée à un levier (10) articulé sur un deuxième segment (2), un triangle formé par le point d'articulation de l'étrier (8), un axe (9) d'étrier (8) pour la connexion articulée sur le levier (10), et une axe (11) pour l'articulation du levier (10) sur une saillie (12) du deuxième segment (2) pour que le point mort pendant la fermeture du levier (10) est depassé et le levier (10) est moulé sur le deuxième segment (2) à la fin de la partie du manche (25) et l'étrier (8) est guidé, dans la direction de pivotement, sur une surface latérale du levier (10) et de la saillie (12) du deuxième segment (2).

2. Bague de serrage selon la revendication 1, **caracterisée en ce que** la begue de serrage présente deux segments (1, 2) qui sont reliés, d'un coté, par l'intermédiaire de l'élément d'articulation (4, 4') et sur un côté opposé, par l'intermédiaire du dispositive de fermeture (3').

3. Bague de serrage selon la revendication 1 ou 2, **caracterisée en ce que** l'étrier (8) est maintenu de façon interchangeable sur le levier (10) ou est maintenu de façon interchangeable, avec le levier (10), sur l'élément (13) du segment (2).

4. Bague de serrage selon l'une des revendications 1 à 3 , **caracterisée en ce que** le deuxième dispositive de réglage présente une vis (81) susceptible d'être vissée dans l'étrier (8)

5. Bague de serrage selon l'une des revendications 1 à 4 , **caracterisée en ce que** le dispositive de fermeture (3) est pourvu d'un deuxième dispositif de réglage (80, 81, 82) destine à régler la position des deux segments (1, 2) l'un par rapport à l'autre.

6. Bague de serrage selon l'une des revendications 1 à 5 , **caractérisée en ce que** le profile (5, 13, 15, 16) entoure les deux segments (1, 2), au moins sur certaines zones.
